# EUROPEAN PATENT APPLICATION

(11) **EP 2 657 459 A2**
(43) Date of publication of application: **30.10.2013**
(21) Application number: 13164080.7
(22) Date of filing: 17.04.2013
(51) Int. Cl.: F01D 17/14

(54) **High temperature servo valve actuator**

(30) Priority: 27.04.2012 US 201213457617
(71) Applicant: Hamilton Sundstrand Corporation, Windsor Locks, CT 06096-1010 (US)
(72) Inventor: Stradinger, Jay, Enfield, CT Connecticut 06082 (US); Palmer, Nigel G. M., W Granby, CT Connecticut 06090 (US)
(74) Representative: Bridge, Kerry Ann

(57) **Abstract**

A high temperature servo valve, 15, to control a valve actuator, 12, for a valve body, 14, in a valve passage, 16, incudes a plurality of high temperature wires, 18a, 18b, to deliver a voltage; an actuator block, 20, of piezo ceramic material connected to the plurality of high temperature wires, 18a, 18b, to move when it receives the voltage; a pressure supply line, 24, connecting the servo valve, 15, to the valve passage, 16, to supply air to the servo valve, 16; a pressure vent line, 26, to vent pressure from the servo valve, 15; and a pressure servo line, 28, connecting to the valve actuator, 12, to control the pressure in the valve actuator, 12.

## Description

### BACKGROUND

This invention relates generally to valves, and specifically to servo valves.

Gas turbine engines typically include bleed systems for bleeding off air from the engine. This air is typically very hot, 1200 degrees F (649 degrees C or 1473 K) or more, with ambient temperatures of 500 degrees F (260 degrees C or 773 K) so components of the system must be able to withstand these temperatures. Servo valves in bleed system typically include a servo air controller that can be sensitive to the high temperatures. Because of this, the servo air controller is sometimes remotely mounted away from the valve and high temperatures. Additionally, heat exchangers, shields and servo lines can assist in protecting the servo air controller from the high temperatures.

### SUMMARY

A high temperature servo valve to control a valve actuator for a valve body in a valve passage includes a plurality of high temperature wires to deliver a voltage; an actuator block of piezo ceramic material connected to the plurality of high temperature wires to move when it receives the voltage; a pressure supply line connecting the servo valve to the valve passage to supply air to the servo valve; a pressure vent line to vent pressure from the servo valve; and a pressure servo line connecting to the valve actuator to control the pressure in the valve actuator.

### BRIEF DESCRIPTION OF THE DRAWINGS

FIG. 1A shows a block diagram view of a servo driven valve.

FIG. 1B shows a close up view of the servo valve of the servo driven valve of FIG. 1 A when the valve is in a closed position.

FIG. 1C shows a close up view of a portion of the servo valve of the servo driven valve of FIG. 1A when the valve is in an open position.

FIG. 2A shows a view of a servo valve when the valve is in an open position.

FIG. 2B shows a view of the servo valve of FIG. 2A when the valve is in a closed position.

### DETAILED DESCRIPTION

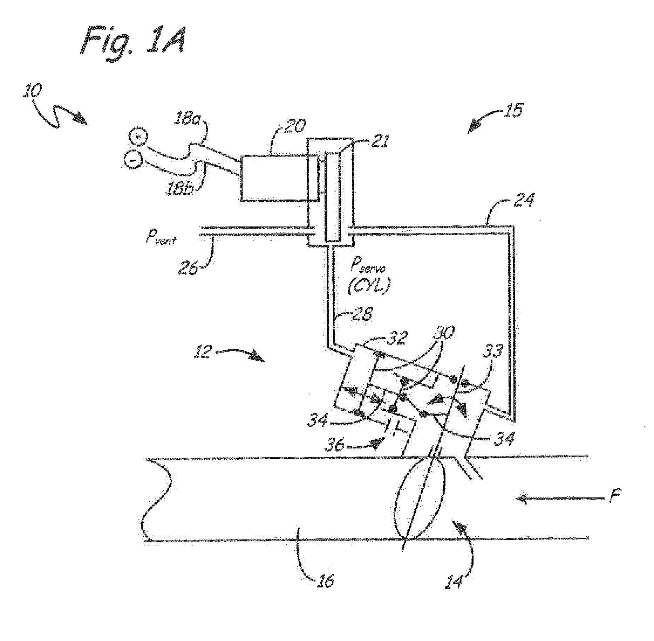

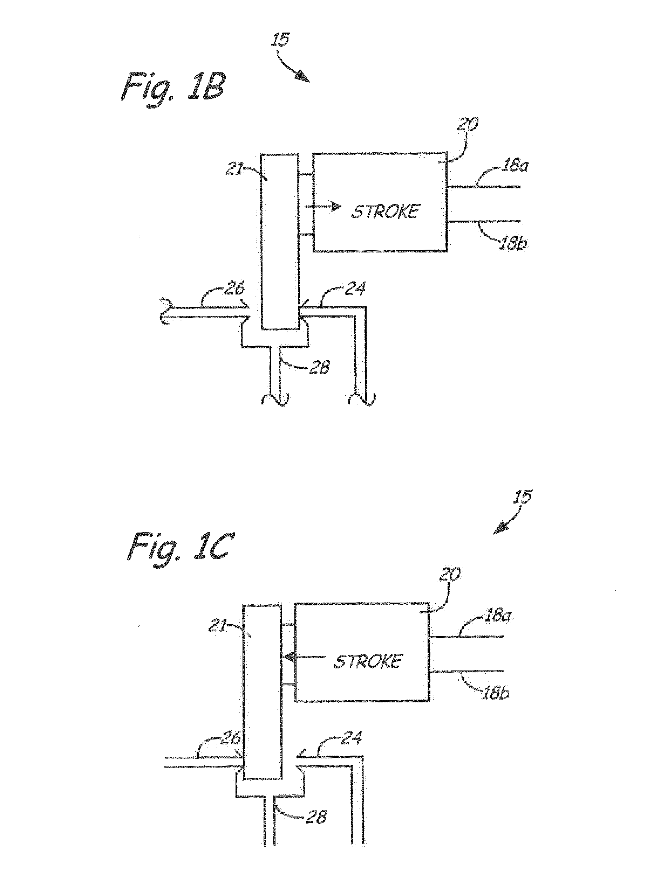

FIG. 1A shows a block diagram view of servo valve driven valve 10 with valve actuator 12, valve body 14, servo valve 15, and flow passage 16 with flow indicated by arrow F. FIG. 1B shows a close up view of servo valve 15 when valve 10 is in a closed position, and FIG. 1C shows a close up view of servo valve 15 when valve 10 is in an open position. Servo valve 15 includes high temperature wires 18a, 18b, actuator block 20, valving element 21, pressure supply line 24, pressure vent line 26 and pressure servo line 28. Valve actuator 12 includes servo pistons 30 in cylinder 32, disk and shaft 33, linkage 34 and vent 36.

High temperature wires 18a, 18b can be nickel coated copper wires and can include glass reinforced mica tape. Alternatively, high temperature wires can be made of different materials which can operate in temperatures of at least 450 degrees C (842 degrees F or 723 K).

Actuator block 20 can be a piezo ceramic material, for example K-12 made of modified bismuth titanate material by Advanced Piezoceramics and Custom Manufactured Ultrasonic Transducers & Devices of Indianapolis, Indiana. In other embodiments, actuator block 20 can be made of a material that can operate at temperatures of at least 700 degrees C (1292 degrees F or 973 K). Valving element 21 can be a solid block of material which is able to cover lines 24, 26 in servo valve 15 when moved by actuator block 20.

Valve body 14 sits in passage 16 and connects to actuator 12 through disk and shaft 33. Disk and shaft 33 connects to pistons 30 through linkage 34 which sit within cylinder 32. Vent 36 allows for free movement of air on one side of pistons 30 in cylinder 32, allowing pistons 30 to displace. Pressure supply line 24 connects to flow passage 16 upstream of valve body 14. In the embodiment shown, pressure supply line 24 connects to part of cylinder 32, but other embodiments can include pressure supply line 24 connecting directly to flow passage 16. Pressure vent line 26 vents to ambient. High temperature wires 18a, 18b connect to actuator block 20. This connection can include a spade lug and bolts. While the embodiment shown includes two pistons, more or fewer could be used depending on valve 10 requirements.

Servo valve 15 controls flow within passage 16 by rotating disk and shaft 33, within valve body 14, opening or closing valve 10. Disk and shaft 33 is controlled by the movement of servo pistons 30 within cylinder 32. Servo pistons 30 movement within cylinder 32 is controlled by the pressure in cylinder 32, coming from pressure servo line 28. The pressure which enters cylinder 32 is controlled by actuator block 20 moving laterally, or stroking, to cause valving element 21 to cover some or part of pressure supply line 24 or pressure vent line 26. Actuator block 20 moves based on high temperature wires 18a, 18b delivering voltage to actuator block 20.

To open valve 10, as shown in FIG. 1C, a voltage is delivered to actuator block 20 through high temperature wires 18a, 18b. This voltage causes some change of shape proportionally to block 20, causing block 20 to move laterally, causing valving element 21 to block pressure vent line 26. This allows pressure in cylinder 32 to build via pressure servo line 28. The increase of pressure in cylinder 32 causes movement of pistons 30, which rotates disk and shaft 33 through linkage 34, opening valve body 14. Closing of valve 10, as shown in FIG. 1B, involves delivering a charge to actuator block 20 through high temperature wires 18a, 18b, causing block 20 to move laterally (stroke) to cause valving element 21 to open pressure vent line 26. This causes high pressure air to leave cylinders 32 via pressure servo line 28, leaving no pressure acting on larger piston 30. Pressure from pressure supply line 24 then acts on smaller piston 30, moving both pistons 30, causing linkage 34 to rotate disk and shaft 33, closing valve body 14.

Air in pressure supply line 24 typically comes from valve passage 16, and when valve passage 16 is part of a bleed system, this air can be very hot. Components of servo valve 15, such as actuator block 20 and wires 18a, 18b are typically not built to handle such high temperatures and may be susceptible to melting or failure if exposed. Past systems have prevented failure of these components by locating the servo actuator away from the valve and connecting it to the actuator with different servo lines and components. This mounting can be about 20 inches (508 mm) to about 50 inches (1270 mm) or further away from valve body 14. Other past systems employed heat shields and heat exchangers to cool the temperature of the air in the pressure supply line 24 before reaching servo valve 15. These resulted in additional components for the valve, increasing the weight and space which the valve needs, and decreased system response.

By forming servo valve 15 with high temperature wires able to operate at temperatures of at least 450 degrees C (842 degrees F or 723 K) bolted to actuator block 20 made of material able to withstand temperatures of at least 700 degrees C (1292 degrees F or 973 K), servo valve 15 can be mounted directly next to valve body 14 without the risk of component failure due to high temperature pressure supply air. This eliminates the extra volume needed for past systems which located servo valve 15 away from valve body or added heat exchangers to cool the air in pressure system. This reduction in parts and servo line length also results in cost and weight savings of valve 10 and increases system response capabilities.

The use of high temperature materials in actuator block 20 also provides greater control of valve 10. As valve body 14 is controlled by air pressure, and air is a compressible medium, the greater lengths between servo valve 15 and valve body 14 results in less precise control of the air pressure regulating valve body 14 movement. By using high temperature materials, servo valve 15 can be located directly next to valve body 14, resulting in more precise control of valve body 14.

Additionally, the use of piezo ceramic material in actuator block 20 provides more precise control of valve 10, as piezo ceramic material is electrically insensitive to change in temperatures. Piezo ceramic material will move the same amount (have the same stroke) based on the voltage with little regard to the system temperature, resulting in a system with wider applicability.

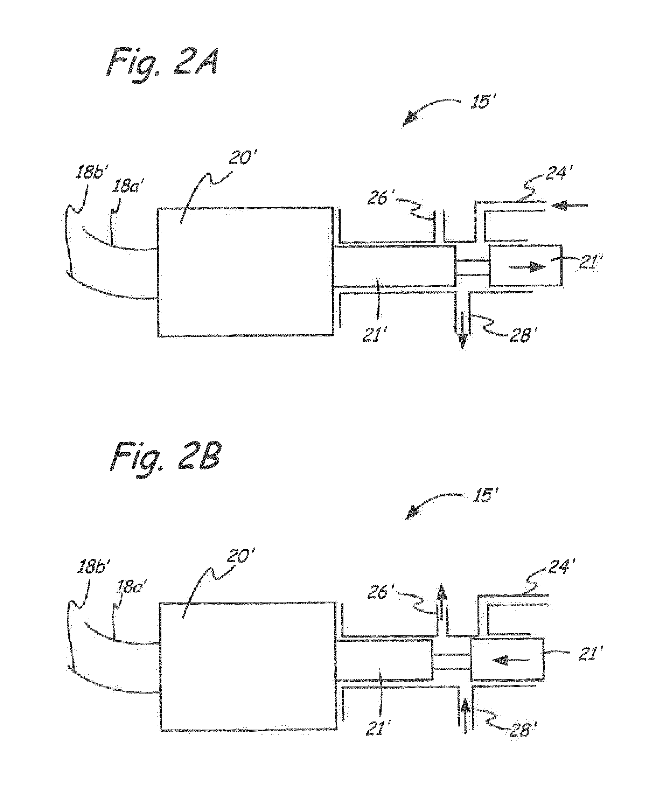

FIG. 2A shows a view of a second embodiment of a valve actuator when the valve is in an open position, and FIG. 2B shows a view of valve actuator 12' when the valve is in a closed position. Similar parts have the same numbers as on FIGS. 1A-1C. Servo valve 15' includes high temperature wires 18a', 18b', actuator block 20', valving element 21', pressure supply line 24', pressure vent line 26', and pressure servo line 28'. Valving element 21' can be a spool and sleeve type or a flapper and nozzle type valving element.

During valve modulation, valving element 21' is moved in response to a voltage through high temperature wires 18a', 18b' delivered to actuator block 20'. This causes a stroke of actuator block 20', moving valving element 21'.

As shown in FIG. 2A, valve is open when valving element 21' is moved to cover pressure vent line 26', allowing communication between pressure supply line 24' and pressure servo line 28'. FIG. 2B shows valve in a closed state, where valving element 21' closes pressure supply line 24', allowing communication between pressure vent line 26' and pressure servo line 28'.

Servo valve 15' shown in Figs. 2A-2B is a pressure balanced design for controlling valve opening and closing by balancing valve opening or closing forces regardless of valve position. This allows for extreme changes in pressure without the need to increase valve servo valve 15' forces. Used with actuator block 20' made of a piezioceramic material and high temperature wires 18a', 18b', servo valve 15' can withstand very high operating temperatures.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A high temperature servo valve (15) to control a valve actuator (12) for a valve body (14) in a valve passage (16), the servo valve (15) comprising:
a plurality of high temperature wires (18a, 18b) to deliver a voltage;
an actuator block (20) of piezo ceramic material connected to the plurality of high temperature wires (18a, 18b) to move when it receives the voltage;
a pressure supply line (24) connecting the servo valve (15) to the valve passage (16) to supply air to the servo valve (15);
a pressure vent line (26) to vent pressure from the servo valve (15); and
a pressure servo line (28) connecting to the valve actuator (12) to control the pressure in the valve actuator (12).

2. The servo valve of claim 1, wherein the valve actuator (12) comprises:
a valve shaft (33) to rotate the valve body;
a servo piston (30) to control the valve body based on the pressure delivered by the pressure servo line to the servo piston (30);
a vent (36) to allow servo piston movement; and
linkage to connect the valve shaft (33) and the servo piston (30) to transfer piston movement into shaft rotation.

3. The servo valve of claim 1, wherein the actuator block (20) moves to stop air flow from the pressure supply line to close the valve.

4. The servo valve of claim 1, wherein the actuator block (20) moves to block the pressure vent line to open the valve.

5. A high temperature valve to control airflow through a valve passage (16), the valve comprising:
a high temperature servo valve (15) with an actuator block (20) comprising piezo ceramic material;
a valve actuator (12) connected to the servo valve (15) and controlled by the servo valve (15); and
a valve body (14) connected to the valve actuator (12) and controlled by the valve actuator (12).

6. The valve of claim 5, wherein the servo valve (15) further comprises:
a plurality of high temperature wires (18a, 18b) to deliver a voltage to the actuator block (20) to move the actuator block (20);
a pressure supply line (24) connecting the servo valve (15) to the valve passage (16) to supply air to the servo valve (15);
a pressure vent line (26) to vent pressure from the servo valve (15); and
a pressure servo line (28) connecting to the valve actuator (12) to control the pressure in the valve actuator (12).

7. The valve of claim 6, wherein the valve actuator (12) comprises:
a valve shaft (33) to rotate the valve body (14);
a servo piston (30) to control the valve body (14) based on the pressure delivered by the pressure servo line (28) to the servo piston (30); and
linkage connecting the servo piston to the valve shaft to transfer piston motion to rotate the valve shaft.

8. The valve of claim 1 or 6, wherein the high temperature wires (18a, 18b) connect to the actuator block (20) with bolted connections.

9. The valve of claim 1 or 6, wherein the high temperature wires (18a, 18b) comprise nickel coated copper wires.

10. The valve of claim 9, wherein the high temperature wires (18a, 18b) further comprise glass reinforced mica tape.

11. The valve of claim 1 or 6, wherein the high temperature wires (18a, 18b) can operate at temperatures of at least 450 degrees C (842 degrees F or 723 K).

12. The valve of claim 1 or 6, wherein the piezo ceramic material can operate at temperatures of at least 700 degrees C (1292 degrees F or 973 K).

13. A high temperature servo valve (15) to control a valve with an actuator for a valve body, the servo valve (15) comprising:
a plurality of wires (18a, 18b) that can operate at temperatures of at least 450 degrees C (842 degrees F or 723 K) to deliver a voltage;
an actuator block (20) of material that can operate at temperatures of at least 700 degrees C (1292 degrees F or 973 K) connected to the plurality of wires (18a, 18b) to move when it receives the voltage;
a pressure supply line (24) connecting the servo valve (15) to the valve passage (16) to supply air to the servo valve (15);
a pressure vent line (26) to vent pressure from the servo valve (15); and
a pressure servo line (28) connecting to the actuator (12) to control the actuator (12).

14. The servo valve of claim 13, wherein the actuator block (20) is a piezo ceramic material.

15. The servo valve of claim 13, wherein the actuator (12) comprises:
a valve shaft (33) to rotate the valve body (14);
a servo piston (30) to control the valve body (14) based on the pressure delivered by the pressure servo line (28) to the servo piston (30);
a vent to allow servo piston movement; and
linkage to connect the valve shaft (33) and the servo piston (30) to transfer piston movement into shaft rotation.
